(19) Europäisches Patentamt
European Patent Office
Office européen des brevets

(11) **EP 3 898 796 B1**

(12) **FASCICULE DE BREVET EUROPEEN**

(45) Date de publication et mention de la délivrance du brevet:
**07.06.2023 Bulletin 2023/23**

(21) Numéro de dépôt: **19842827.8**

(22) Date de dépôt: **17.12.2019**

(51) Classification Internationale des Brevets (IPC):
**C08J 9/02** *(2006.01)*  **C08J 9/30** *(2006.01)*
**C08G 63/12** *(2006.01)*  **C08J 9/00** *(2006.01)*

(52) Classification Coopérative des Brevets (CPC):
**C08J 9/02; C08G 63/12; C08J 9/30;** C08J 9/0023;
C08J 9/0028; C08J 9/0033; C08J 9/0052;
C08J 2300/24; C08J 2367/02

(86) Numéro de dépôt international:
**PCT/FR2019/053098**

(87) Numéro de publication internationale:
**WO 2020/128283 (25.06.2020 Gazette 2020/26)**

(54) **UTILISATION DE DIOLS LINÉAIRES POUR LA FABRICATION DE MOUSSES POLYESTER BIOSOURCÉES**

VERWENDUNG VON LINEAREN DIOLEN ZUR HERSTELLUNG VON POLYESTERSCHÄUMEN AUS BIOLOGISCHEN QUELLEN

USE OF LINEAR DIOLS FOR THE PRODUCTION OF BIOSOURCED POLYESTER FOAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2018 FR 1873148**

(43) Date de publication de la demande:
**27.10.2021 Bulletin 2021/43**

(73) Titulaire: **SAINT-GOBAIN ISOVER**
**92400 Courbevoie (FR)**

(72) Inventeurs:
• **SAVONNET, Marie**
**75018 PARIS (FR)**
• **SALOMON, Pierre**
**92400 COURBEVOIE (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A1- 2 628 757      WO-A1-2010/059925**
**WO-A1-2016/207517**

**Description**

La présente invention concerne un procédé de fabrication de mousses polyester biosourcées comprenant une étape de préoligomérisation des réactifs biosourcés, suivie d'une étape d'expansion et de durcissement de la composition de réactifs biosourcés préoligomérisés.

Il est connu de préparer des mousses thermodurcies, majoritairement biosourcées, à partir de sucres ou d'alcools de sucres et/ou d'acides biosourcées.

La demande internationale WO2016139401 décrit ainsi la production de mousses à partir de sucres réducteurs et d'amines,

La demande internationale WO2016/174328 décrit la fabrication de mousses thermodurcies à partir de saccharides et de catalyseurs acides.

La demande française WO2018/109362, divulgue la préparation de mousses par expansion et durcissement de compositions à base de diacides carboxyliques α-hydroxylés porogènes, en particulier d'acide tartrique.

La demande internationale WO2016/207517 décrit un procédé de fabrication de mousses polyester par réaction d'un composant polyol comprenant du glycérol, avec un composant polyacide comprenant de l'acide citrique, en présence d'un catalyseur.

Les demandes françaises FR3075208 et FR3075209 de la Demanderesse décrivent des mousses polyester préparées par réaction de sucres hydrogénés et d'un polyacide porogène tel que l'acide citrique.

La demande internationale WO2010/059925 décrit un polyester réticulé obtenu par polycondensation de polyols trihydroxylés et de polyacides comprenant au moins deux fonctions carboxyle.

La demande EP 2 628 757 décrit un procédé de production de mousses polyester par réaction de glycérol et d'acide tricarboxylique en contact avec une surface métallique.

Les mousses obtenues à partir de ces systèmes réactionnels, en particulier lorsqu'elles sont préparées en présence d'au moins un agent tensioactif et d'un catalyseur d'estérification, ont une porosité fine et régulière, mais souffrent d'un manque de souplesse et d'élasticité et sont assez friables. Lors de la mise en place des produits, par exemple entre les chevrons d'une toiture, cela peut provoquer l'endommagement, voire la rupture des plaques et/ou la formation de poussières, désagréables pour l'installateur.

Dans le cadre de ses recherches visant à optimiser les propriétés mécaniques des mousses polyester à base d'ingrédients biosourcés, la Demanderesse a constaté que l'utilisation d'une certaine fraction de diols, en remplacement des polyols de fonctionnalité plus élevée tels que les saccharides ou les sucres hydrogénés, permettait d'améliorer de manière spectaculaire les propriétés mécaniques des mousses obtenues, en particulier la flexibilité et l'élasticité, tout en préservant la finesse et la régularité de leur porosité.

Les diols utilisés sont de préférence des alcanediols, ou alkylèneglycols, de préférence à chaîne linéaire comportant de 3 à 6 atomes de carbone, de préférence de 4 à 6 atomes de carbone. En effet, l'éthylèneglycol n'améliore pas de manière notable les propriétés mécaniques et l'utilisation d'alcanediols ayant une chaîne comportant plus de 6 atomes de carbone n'a pas permis d'obtenir des mousses présentant à la fois une porosité fine et une certaine élasticité.

Dans les demandes publiées citées en introduction, la réaction de polymérisation et l'expansion (moussage) du mélange réactionnel sont décrites comme ayant lieu simultanément pendant l'unique étape de chauffage. La qualité des mousses obtenues, c'est-à-dire la finesse et l'uniformité des pores, la faible masse volumique et les bonnes propriétés mécaniques, dépend en effet dans une très large mesure de la simultanéité de la réaction de polymérisation et de la formation de l'agent d'expansion. Si l'agent d'expansion est généré dans un mélange réactionnel trop liquide il s'échappera vers l'atmosphère avant que l'augmentation de la viscosité du mélange réactionnel soit suffisante pour le retenir. Si la réaction de polymérisation est précoce, le mélange réactionnel sera excessivement visqueux lorsque l'agent d'expansion gazeux commencera à se former et les bulles seront grosses et irrégulières.

Dans la présente invention on utilisera un procédé de fabrication de mousses polyester permettant une bonne maîtrise de l'évolution de la viscosité du mélange réactionnel indépendamment de la formation de l'agent d'expansion, puis le déclenchement de la libération de l'agent d'expansion ($CO_2$) lorsque la viscosité du système réactionnel est optimale, c'est-à-dire ni trop faible ni trop importante.

Un tel procédé de fabrication de mousses polyester est décrit en détail dans la demande française 1762334 de la Demanderesse, non encore publiée au moment du dépôt de la présente demande, et comprend deux étapes de chauffage distinctes, mises en oeuvre à des températures différentes, à savoir :

- une première étape de chauffage du mélange réactionnel contenant l'ensemble des réactifs, à une température suffisante pour débuter la polymérisation des réactifs mais significativement inférieure à la température de formation de l'agent d'expansion, puis
- une deuxième étape de chauffage du mélange réactionnel prépolymérisé obtenu, jusqu'à une température proche de la température de formation de l'agent d'expansion.

La première étape de chauffage est mise en oeuvre de préférence sous agitation mécanique, tandis que la deuxième étape de chauffage est mise en oeuvre en absence d'agitation.

A l'issue de la première étape de chauffage, la composition réactionnelle chaude est toujours liquide mais plus visqueuse que le mélange réactionnel de départ. Cette première composition réactionnelle liquide - également appelée parfois ci-après « mélange d'oligomères » - contient des oligomères formés par estérification des polyols avec le polyacide porogène et avec d'autres acides éventuellement présents. Elle est essentiellement anhydre, c'est-à-dire elle contient uniquement l'eau liée aux réactifs de départ ou l'eau formée par la réaction de condensation entre les fonctions acides et les fonctions hydroxyle et non encore évaporée.

Les agents tensioactifs, nécessaires à la formation d'une mousse fine de bonne qualité, sont de préférence ajoutés à cette première composition liquide prépolymérisée, après la première étape de chauffage et avant la deuxième étape de chauffage. On pourrait en principe les ajouter au mélange réactionnel de départ, mais cela ne représente pas un mode de réalisation préféré.

L'acide citrique est le polyacide porogène préféré. Il joue le rôle d'agent d'expansion chimique libérant, par décomposition thermique, du dioxyde de carbone ($CO_2$). La première étape de chauffage doit donc être mise en oeuvre à une température significativement inférieure à la température de décomposition chimique de l'acide citrique (170 °C) tandis que la deuxième étape de chauffage doit être mise en oeuvre à une température proche de cette température de décomposition thermique de l'acide citrique ou supérieure à celle-ci.

La présente invention a donc pour objet un procédé de fabrication d'une mousse polyester thermodurcie, comprenant les étapes successives suivantes :

(a) chauffage d'une composition de préoligomérisation essentiellement anhydre, contenant

- un composant polyol comprenant au moins 70 % en poids, de préférence au moins 80 % en poids, d'un mélange d'au moins un sucre hydrogéné et d'au moins un diol choisi parmi les diols en $C_{3-6}$,
- un composant polyacide comprenant au moins 50 % en poids de polyacide porogène choisi de préférence parmi l'acide citrique et les acides dicarboxyliques $\alpha$-hydroxylés de

       formule (I)       $HOOC\text{-}(CHR^1)_n\text{-}CHOH\text{-}COOH$

    où n est un entier allant de 1 - 4, de préférence de 1 - 3, en particulier 1 ou 2, et de manière tout particulièrement préférée 1, et chaque $R^1$ représente indépendamment un atome d'hydrogène, un groupe hydroxyle (-OH) ou un groupe alkyle, de préférence un groupe alkyle en $C_{1-4}$, et de préférence,
- un catalyseur, à une température comprise entre 100 °C et moins de 160 °C pendant une durée comprise entre 10 et 60 minutes, de préférence entre 15 et 40 minutes, sous agitation mécanique, de manière à faire réagir le composant polyol avec le composant polyacide et à former une composition d'esters oligomères, également appelée ci-après mélange d'oligomères,

(b) incorporation d'une composition d'agent tensioactif dans la composition d'esters oligomères, de manière à obtenir une composition expansible thermodurcissable,

(c) introduction de la composition expansible thermodurcissable obtenue dans un moule ou application de la composition expansible thermodurcissable sur un support,

(d) chauffage de la composition expansible thermodurcissable, en l'absence d'agitation mécanique, à une température au moins égale à 165 °C, de préférence comprise entre 175 °C et 220 °C, idéalement entre 190 °C et 215 °C pendant une durée comprise entre 10 minutes et 8 heures, de préférence entre 20 minutes et 7 heures et en particulier entre 30 minutes et 6 heures, de manière à former une mousse polyester thermodurcie.

La première étape (étape (a)) du procédé de l'invention est une étape d'oligomérisation des réactifs, c'est-à-dire une étape de condensation partielle des groupes acides du composant polyacide et des groupes hydroxyle du composant polyol, éventuellement en présence d'un catalyseur. Le mélange réactionnel comprenant le composant polyol, le composant polyacide et éventuellement le catalyseur est préparé par mélange physique des ingrédients, éventuellement préchauffés séparément.

Dans un mode de réalisation préféré, le composant polyol peut être liquéfié par chauffage, puis on ajoute au polyol liquide le composant polyacide puis, le cas échéant, en dernier, le catalyseur. L'agitation du mélange réactionnel commence au plus tard au moment de l'ajout du dernier composant, qui est généralement le catalyseur.

Le mélange réactionnel de départ comprend donc deux composants essentiels, à savoir

- le composant polyol constitué de ou contenant un sucre hydrogéné et un diol choisi parmi les diols en $C_{3-6}$,
- le composant polyacide constitué de ou contenant un polyacide porogène, de préférence l'acide citrique.

A la fin de l'étape d'oligomérisation un troisième composant essentiel est ajouté au mélange d'oligomères. Ce troisième composant essentiel est un agent tensioactif. Il est indispensable à la formation de mousses fines de bonne qualité.

Le composant polyacide peut comprendre des polyacides différents de l'acide citrique et des acides dicarboxyliques α-hydroxylés et le composant polyol peut comprendre des polyols, c'est-à-dire des composés polyhydroxylés, différents d'un sucre hydrogéné ou d'un diol en $C_{3-6}$. Des exemples d'autres polyacides et d'autres polyols seront donnés ci-après.

Dans la présente demande, les quantités ou teneurs en composants polyol ou polyacide s'entendent toujours pour l'ensemble des polyols ou pour l'ensemble des polyacides présents dans la composition.

Cette définition des composants polyols et polyacides n'exclut pas la possibilité que certains agents tensioactifs soient considérés comme faisant partie des composants polyols ou polyacides. C'est le cas par exemple des alkylpolyglycosides (APG) qui font partie des agents tensioactifs préférés. Les alkylpolyglycosides comportent un ou plusieurs motifs de sucres (motifs polyhydroxylés) et jouent à la fois le rôle d'agent tensioactif en modulant et contrôlant la porosité des mousses obtenues, et le rôle de polyols susceptibles de participer à la formation d'un réseau tridimensionnel durci par réaction avec les groupes acide du composant polyacide.

Dans la présente invention lorsqu'un composé, présent dans la composition expansible thermodurcissable, peut être considéré à la fois comme un premier des trois composants essentiels *et* comme un deuxième des trois composants essentiels de la composition (composant polyol, composant polyacide, agent tensioactif) il sera considéré à la fois comme l'un et comme l'autre. Cela implique qu'il sera pris en compte dans les quantités de chacun de ces deux composants.

Ainsi, une composition expansible et thermodurcissable contenant

48 % en poids de sorbitol,
47 % en poids d'acide citrique,
3 % en poids d'alkylpolyglycosides et
2 % en poids d'un catalyseur d'estérification

aura une teneur en composant polyol égale à 51 % (48 % sorbitol + 3 % d'alkylpolyglycoside), une teneur en composant polyacide égale à 47 %, une teneur en agent tensioactif égale à 3 % et une teneur en catalyseur d'estérification égale à 2 %. La somme numérique de ces quatre composants est alors bien entendu supérieure à 100 % car les 3 % d'alkylpolyglycosides sont comptabilisés doublement.

Le premier composant essentiel de la composition expansible thermodurcissable est le composant polyol. Ce composant comprend au moins un sucre hydrogéné et au moins un diol en $C_{3-6}$, ce diol étant de préférence un diol où les deux fonctions hydroxyle ne sont pas situées sur deux atomes de carbone voisins, encore plus préférentiellement un diol avec une chaîne alkylène linéaire portant une fonction hydroxyle à chaque extrémité.

On peut utiliser pour la préparation des compositions expansibles thermodurcissables de la présente invention en principe n'importe quel sucre hydrogéné.

Par « sucre hydrogéné » on entend l'ensemble des produits résultant de la réduction d'un saccharide (hydrate de carbone) choisi parmi les monosaccharides, disaccharides et oligosaccharides et des mélanges de ces produits. Les sucres hydrogénés sont également appelés alcools de sucres, alditols ou polyols. Ils peuvent être obtenus par hydrogénation catalytique de saccharides. L'hydrogénation peut être effectuée par des méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney.

Le ou les sucres hydrogénés sont choisis de préférence dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol, et les produits d'hydrogénation d'hydrolysats d'amidon.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

[Math. 1]

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

On utilisera de manière particulièrement préférée un sucre hydrogéné de formule $C_nH_{2n+2}O_n$ où n vaut 4, 5 ou 6, et les produits d'hydrogénation d'hydrolysats d'amidon.

Par ailleurs, pour des raisons d'innocuité des fumées de combustion des mousses polyester, les compositions expansibles thermodurcissables contiennent de préférence moins de 1 % en poids, en particulier moins de 0,1 % en poids de glycérol. Elles sont de préférence exemptes de glycérol.

Parmi les diols en $C_{3-6}$ on préfère en particulier le 1,3-propanediol, le 1,4-butane-diol et le 1,6-hexanediol, et parmi ces derniers en particulier le 1,4-butanediol.

Le mélange d'au moins un sucre hydrogéné et d'au moins un diol en $C_{3-6}$ est constitué de 5% à 95% en poids, de préférence de 20 à 80 % en poids, de sucre hydrogéné et de 95% à 5% en poids, de préférence de 80 % à 20 % en poids, de diol linéaire en $C_{3-6}$, ces pourcentages se complétant à 100%.

Les autres polyols, qui ne sont ni des sucres hydrogénés et ni des diols en $C_{3-6}$, sont de préférence, mais pas nécessairement, des polyols biosourcés, en particulier des sucres. Ils ne représentent pas plus de 30 % en poids, de préférence au plus 20 % en poids, et idéalement moins de 10 % en poids du composant polyol.

Les sucres utilisables en tant que partie du composant polyol peuvent être des sucres réducteurs ou des sucres non réducteurs.

On entend par sucres réducteurs les hydrates de carbone de formule présentant au moins un groupe aldéhyde ou cétone (groupe réducteur). Les sucres réducteurs utilisables dans la présente invention englobent les oses (monosaccharides) et les osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucres réducteurs.

On pourra également utiliser de manière avantageuse des hydrolysats d'amidon obtenus par hydrolyse enzymatique ou hydrolyse acide d'amidon.

Les sucres non-réducteurs utilisables sont le saccharose et le tréhalose.

Dans un mode de réalisation préféré, le composant polyol comprend au moins 50 % en poids, de préférence au moins 60 % en poids, plus préférentiellement au moins 80 %, et idéalement au moins 90 % en poids de sucre hydrogéné.

Dans un mode de réalisation avantageux, au moins une partie des polyols, qu'il s'agisse des sucres ou des sucres hydrogénés, sont porteurs de groupes hydrophobes tels que des chaînes grasses, par exemple des groupes alkyle en $C_{6-24}$, ou des groupes aromatiques. L'introduction de tels groupes hydrophobes permet d'augmenter le caractère hydrophobe des mousses et réduire leur affinité pour l'eau.

Le deuxième composant essentiel du mélange réactionnel de départ et de la composition expansible thermodurcissable est le composant polyacide.

Le composant polyacide comprend au moins un polyacide porogène. Ce polyacide porogène est un acide qui comporte au moins deux fonctions carboxyle et qui, dans les conditions de thermodurcissement de la mousse, se dégrade et libère un composant gazeux (généralement du $CO_2$) qui permet l'expansion de la composition et la formation de la mousse.

L'acide citrique est connu pour son pouvoir porogène et est l'acide porogène préféré.

La Demanderesse a mis en évidence récemment que d'autres acides dicarboxyliques pouvaient remplacer partiellement ou totalement l'acide citrique en tant qu'agent porogène. La demande française 16 62370 citée en introduction et non encore publiée au moment du dépôt de la présente demande, décrit en détail ces acides porogènes choisis parmi les acides dicarboxyliques α-hydroxylés et leur utilisation pour la formation de mousses biosourcées.

Dans un mode de réalisation préféré du procédé de l'invention, les acides dicarboxyliques α-hydroxylés préférés sont l'acide tartrique (HOOC-CHOH-CHOH-COOH) et l'acide malique (HOOC-$CH_2$-CHOH-COOH).

Le composant polyacide comprend au moins 50 % en poids, en particulier au moins 65 % en poids et idéalement au moins 80 % en poids de polyacide porogène, de préférence d'acide citrique, rapporté au poids total du composant polyacide.

D'autres polyacides, c'est-à-dire des polyacides non-porogènes, susceptibles de réagir avec le composant polyol pour former un réseau de polyester peuvent être présents. L'utilisation de ces acides permet l'ajustement, en particulier l'augmentation, de la masse volumique des mousses formées. Ces autres polyacides sont de préférence des polyacides monomères, autrement dit des polyacides qui ne sont pas formés par polymérisation de monomères portant un groupe acide, tels que l'acide (meth)acrylique.

Les autres polyacides sont de préférence des acides polycarboxyliques, par exemple des acides dicarboxyliques, tricarboxyliques ou tétracarboxyliques.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique. Bien entendu, on pourra utiliser avantageusement les anhydrides des diacides précités, qui sont généralement plus réactifs que les diacides correspondants.

Les acides tricarboxyliques englobent, par exemple, l'acide tricarballylique, l'acide 1,2,4-butanetricarboxylique, l'acide aconitique, l'acide hémimellitique, l'acide triméllitique et l'acide trimésique ;

On peut citer comme acide tétracarboxylique, par exemple l'acide 1,2,3,4-butane-tétracarboxylique et l'acide pyroméllitique.

Les composants polyol et polyacide tels que définis ci-dessus représentent, ensemble, au moins 80 %, de préférence au moins 85 %, et idéalement au moins 90 % du poids sec de la composition de préoligomérisation (mélange réactionnel de départ).

Par ailleurs, après préoligomérisation et ajout de l'agent tensioactif, le composant polyol résiduel, le composant polyacide résiduel et l'ester oligomère formé représentent avantageusement ensemble au moins 60 %, de préférence au moins 70 % et en particulier au moins 80 % du poids sec de la composition expansible thermodurcissable.

Dans la composition de préoligomérisation, le composant polyol représente de préférence de 20 à 60 % en poids, en particulier de 25 à 50 % en poids et idéalement de 30 à 45 % en poids du poids total des composants polyol et polyacide. Il en découle logiquement que le composant polyacide représente de préférence de 40 à 80 % en poids, en particulier de 50 à 75 % en poids, et idéalement de 55 à 70 % en poids du poids total des composants polyol et polyacide.

De manière connue, on ajustera les quantités respectives des composants polyol et polyacide de manière à ce que les fonctions -OH et les fonctions -COOH soient présentes en un rapport molaire compris entre 0,65 et 1,8, de préférence entre 0,8 et 1,6, en particulier entre 1,0 et 1,4.

La réaction d'oligomérisation en masse (étape (a)) peut être mise en oeuvre en présence d'un catalyseur d'estérification connu choisi par exemple parmi les acides forts tels que l'acide sulfurique, l'acide chlorhydrique, l'acide para-toluène-sulfonique, l'acide trifluorométhanesulfonique et l'acide trifluoroacétique, et les acides de Lewis couramment utilisés pour la catalyse des réactions d'estérification tels que les zirconates et les titanates, les acides de Lewis à base de zinc, de fer et d'aluminium.

La réaction de préoligomérisation en masse peut également être catalysée par l'hypophosphite de sodium qui n'est pas à proprement parler un catalyseur d'estérification, mais dont on pense qu'il favorise la formation d'anhydrides de l'acide citrique. Ces derniers sont plus réactifs que le triacide et sont capables de réagir avec les polyols.

L'un et/ou l'autre de ces deux types de catalyseurs peuvent donc être présents dans la composition de préoligomérisation.

Lorsqu'on utilise pour la catalyse de la réaction d'oligomérisation un catalyseur d'estérification tel qu'un acide fort, il est souhaitable d'ajouter à la composition expansible thermodurcissable, au moment de l'étape (b), une quantité efficace d'hypophosphite de sodium ou d'acide hypophosphoreux, par exemple une quantité comprise entre 0,5 et 10 % en poids, de préférence entre 1,0 et 5 % en poids, rapporté au poids des matières solides de la composition de liant. L'hypophosphite de sodium et l'acide correspondant sont en effet, à ce jour, les composés qui catalysent le plus efficacement le durcissement des oligomères en une masse thermodurcie, insoluble dans l'eau.

La réaction de préoligomérisation est mise en oeuvre à une température supérieure ou égale à 100 °C et inférieure à 160 °C. Il est nécessaire de chauffer le mélange réactionnel à une température au moins égale à 100 °C pour évaporer l'eau formée par la réaction de condensation (estérification). Lorsqu'on chauffe la composition de préoligomérisation au-delà de 160 °C, l'acide citrique risque de se dégrader prématurément, libérant du dioxyde de carbone qui s'échappera de la composition réactionnelle insuffisamment visqueuse et sous agitation.

Après l'étape (a) d'oligomérisation ou à la fin de celle-ci, on ajoute et incorpore au mélange d'oligomères obtenu une composition d'agent tensioactif (étape (b)).

La composition d'agent tensioactif peut contenir de l'eau, ou bien on pourra introduire de l'eau en même temps que la composition d'agent tensioactif. La présence d'un peu d'eau peut être souhaitable car elle facilite l'incorporation de l'agent tensioactif dans le mélange d'oligomères et le moussage du mélange obtenu.

Dans un mode de réalisation avantageux, le procédé de fabrication de mousses polyester thermodurcies de la présente invention comprend, pendant ou après l'étape (b) et avant les étapes (c) et (d), le moussage de la composition expansible thermodurcissable. Ce moussage, c'est-à-dire l'incorporation d'air ou d'un autre gaz dans la composition expansible thermodurcissable liquide, permet d'augmenter le volume de la composition expansible thermodurcissable, de réduire la masse volumique des mousses finales et d'homogénéiser la distribution des tailles des pores dans les mousses finales.

Le moussage peut être mise en oeuvre par des moyens mécaniques, par exemple par fouettage, battage ou agitation mécanique et/ou par injection de gaz.

Bien que la présence d'eau au cours de l'étape (b) puisse être intéressante pour des raisons de facilité de mise en oeuvre de la composition expansible thermodurcissable, on veillera à limiter le plus possible cette quantité d'eau. En effet, les deux réactions qui aboutissent à la formation d'une mousse polyester thermodurcie, à savoir l'estérification des oligomères et la décomposition de l'acide citrique, ne pourront avoir lieu qu'après évaporation complète de l'eau, ce qui demande nécessairement un apport d'énergie thermique additionnel.

Par conséquent, la composition expansible thermodurcissable contient de préférence au plus 25 % en poids, plus préférentiellement au plus 15 % en poids et en particulier au plus 5 % en poids d'eau.

Le troisième composant essentiel de la composition expansible thermodurcissable est un agent tensioactif. Dans la présente demande ce terme englobe également des mélanges de plusieurs agents tensioactifs.

Comme déjà expliqué ci-avant, cet agent tensioactif est de préférence ajouté après l'étape d'oligomérisation ou à la fin de l'étape d'oligomérisation.

La fonction de cet ingrédient est d'améliorer la qualité de la mousse, c'est-à-dire de réduire la taille des pores, de resserrer la distribution de la taille des pores et de réduire la masse volumique des mousses durcies obtenues.

L'agent tensioactif présente de préférence une balance hydrophile/lipophile (HLB) comprise entre 3 et 13, de préférence entre 5 et 8.

Dans un mode de réalisation, l'agent tensioactif est un mélange d'un tensioactif anionique et d'un tensioactif cationique. Dans le domaine des mousses aqueuses liquides, il est connu qu'une association de deux types d'agents tensioactifs de charges opposées permet de stabiliser le film de tensioactifs à l'interface eau/air en réduisant la répulsion entre molécules de même charge. Comme il sera montré ci-après dans les exemples, la Demanderesse a obtenu d'excellents résultats avec un mélange de dodécylsulfate de sodium (SDS) et de bromure de tétradécyltriméthyl ammonium (TTAB) ou de bromure de cétyltriméthylammonium (CTAB) et l'utilisation d'une association de ces deux types agents tensioactifs constitue donc un mode de réalisation préféré. Le rapport en poids TTAB/SDS ou CTAB/SDS est de préférence compris entre 1,5 et 2,5, en particulier entre 1,8 et 2,2 et idéalement proche de 2.

Les agents tensioactifs non-ioniques constituent une alternative intéressante à l'association d'un tensioactif anionique et d'un tensioactif cationique. En effet, pour les agents tensioactifs non-ioniques, il n'existe pas de forces de répulsion entre têtes hydrophiles de même charge et certains tensioactifs non-ioniques sont de ce fait particulièrement appropriés pour la formation de mousses de bonne qualité. Les agents tensioactifs non-ioniques utilisés dans la présente invention ont de préférence une HLB comprise entre 3 et 13.

C'est le cas par exemple des alkylpolyglycosides (APG) qui sont des molécules comportant une tête hydrophile formée d'un ou de plusieurs motifs de sucre, greffée de chaîne grasse alkyle.

Les alkylpolyglycosides comportent de préférence entre 1 et 2 motifs glucoside et les chaînes alkyle comportent de préférence de 8 à 14 atomes de carbone et sont de préférence des chaînes alkyle linéaires.

On peut citer à titre d'exemples d'alkylpolyglycosides les produits de la marque Glucopon, notamment le Glucopon 600 CSUP (lauryl glucoside) et le Glucopon 650 EC (coco glucoside).

La quantité de l'agent tensioactif représente avantageusement de 0,1 à 10 %, de préférence de 1 à 8 % et en particulier de 2 à 6 % du poids sec total de la composition expansible.

Dans un mode de réalisation préféré de l'invention, on ajoute en outre après la fin de l'étape d'oligomérisation, avant ou après l'ajout de l'agent tensioactif, un agent de nucléation qui crée des points d'amorçage à partir desquels les bulles se développent au cours du moussage de la composition. Cet agent de nucléation permet ainsi l'obtention de mousses avec une porosité particulièrement fine et régulière.

L'agent de nucléation est une charge particulaire, de préférence minérale, qui est insoluble dans le mélange d'oligomères obtenu. Il est choisi par exemple dans le groupe constitué de plâtre, ciment, silice, zéolithes, perlite, talc et argiles. On utilisera de préférence des argiles telles que les smectites, notamment la montmorillonite, les bentonites et les phyllosilicates, notamment la kaolinite.

La quantité d'agent de nucléation est généralement comprise entre 0,5 et 10 parts en poids, de préférence entre 1,0 et 5,0 parts en poids pour 100 parts en poids de mélange d'oligomères.

Enfin, la composition expansible peut contenir un ou plusieurs autres additifs utilisés classiquement dans l'industrie de la mise en oeuvre et transformation des polymères tels que des colorants, pigments, agents anti-bactériens ou anti-fongiques, agents ignifugeants, absorbeurs UV, agents hydrophobes. Ces additifs représentent au total de préférence au plus 10 % du poids sec de la composition.

Bien que la composition expansible puisse contenir, en principe, un agent d'expansion organique, il est important de noter qu'il n'est pas nécessaire d'en ajouter.

En effet, l'acide citrique, présent dans le composant polyacide, joue le rôle d'agent d'expansion. Lorsque la composition expansible est chauffée, à l'étape (c), à une température proche de 170 °C, l'acide citrique se décompose, de manière connue, en acide aconitique et $CO_2$ (M. M. Barbooti et al. « Thermal Décomposition of Citric Acid », Thermochimica Acta, 98 (1986), 119-126 ; D. Wyrzykowski et al. "Thermal Behavior of Citric Acid and Isomeric Aconitic Acids", J. Therm. Anal. Calorim. (2001), 104 :731-735). Il sera montré ci-après dans les exemples de réalisation que des mousses de bonne qualité et de faible masse volumique peuvent être obtenues en l'absence de tout agent d'expansion physique. Lorsque l'étape (d) est mise en oeuvre à une température supérieure à 170 °C, l'ajout d'un agent d'expansion organique est donc superflu. Dans un mode de réalisation préféré du procédé de la présente invention, la composition expansible est donc essentiellement exempte d'agent d'expansion physique organique.

La composition d'esters oligomères (mélange d'oligomères), ne contenant pas d'agent tensioactif, et la composition expansible thermodurcissable renfermant l'agent tensioactif peuvent être refroidies et conservées et/ou transportées sous forme de pâte ou de granulés. Ces granulés ou cette pâte peuvent ensuite être fondues par simple chauffage à une température proche de 100 °C et utilisées pour la fabrication de mousses polyesters thermodurcies.

La présente demande a également pour objet une composition expansible thermodurcissable, solide à température ambiante, essentiellement exempte d'eau, obtenue par

(i) chauffage d'une composition de préoligomérisation essentiellement anhydre, contenant

- un composant polyol comprenant au moins 70 % en poids, de préférence au moins 80 % en poids, d'un mélange d'au moins un sucre hydrogéné et d'au moins un diol en $C_{3-6}$,
- un composant polyacide comprenant au moins 50 % en poids de polyacide porogène choisi parmi l'acide citrique et les acides dicarboxyliques $\alpha$-hydroxylés de

formule (I)           $HOOC-(CHR^1)_n-CHOH-COOH$

où n est un entier allant de 1 - 4, de préférence de 1 - 3, en particulier 1 ou 2, et de manière tout particulièrement préférée 1, et chaque $R^1$ représente indépendamment un atome d'hydrogène, un groupe hydroxyle (-OH) ou un groupe alkyle, de préférence un groupe alkyle en $C_{1-4}$, et éventuellement

- un catalyseur, à une température comprise entre 100 °C et moins de 160 °C pendant une durée comprise entre 10 et 200 minutes, de préférence entre 15 et 100 minutes, sous agitation mécanique, de manière à faire réagir le composant polyol avec le composant polyacide et à former une composition d'esters oligomères,

(ii) incorporation d'une composition d'agent tensioactif dans la composition d'esters oligomères, de manière à obtenir une composition expansible thermodurcissable, et

(iii) refroidissement de la composition expansible thermodurcissable jusqu'à température ambiante.

La présente demande a en outre pour objet l'utilisation d'une telle composition expansible thermodurcissable, solide à température ambiante et essentiellement exempte d'eau, pour la fabrication de mousses polyester thermodurcies.

Lorsque la composition expansible thermodurcissable chaude est étalée sous forme d'un film continu sur un support, l'épaisseur du film, avant chauffage, c'est-à-dire avant expansion et durcissement, est avantageusement au moins égale à 1 mm, de préférence au moins égale à 2 mm, en particulier au moins égale à 5 mm, et plus préférentiellement au moins égale à 10 mm.

Le volume du bloc de mousse formé peut varier entre de très larges limites. Lorsque la composition expansible est utilisée dans un procédé continu formant par exemple des bandes ou profilés de matériaux isolants, il est potentiellement infini. Lorsque la composition expansible est utilisée pour former des blocs discrets, par exemple des plaques ou feuilles de mousses, sa quantité est de préférence telle que le volume de chaque bloc de mousse solide thermodurcie soit au moins égal à 500 cm$^3$, de préférence au moins égal à 0,001 m$^3$, en particulier au moins égal à 0,01 m$^3$.

Le bloc de mousse se présente de préférence sous forme d'une plaque.

Pour chauffer la composition expansible à l'étape (d) on pourra utiliser en principe n'importe quel moyen usuel connu dans le domaine de la mise en oeuvre et transformation des polymères, tels que l'air chaud, le rayonnement thermique, les micro-ondes ou la mise en contact avec un support chaud (moule).

Bien entendu, la température du moyen de chauffage (étuve, support, moule) pourra être supérieure à la température réactionnelle indiquées pour l'étape (d).

La durée de l'étape de chauffage (étape (d)) dépend non seulement de la température, mais également du moyen de chauffage et du rapport volume/surface du bloc de mousse formé. Elle peut aller de quelques minutes à plusieurs heures, typiquement de 10 minutes et 8 heures, de préférence de 20 minutes à 7 heures et en particulier de 30 minutes à 6 heures.

Dans un mode de réalisation préféré, le procédé selon l'invention comprend en outre une étape d'usinage de la mousse polyester thermodurcie obtenue à l'étape (d).

**EP 3 898 796 B1**

**Exemple**

On prépare les compositions expansibles thermodurcissables ayant la composition spécifiée dans le tableau 1. Pour cela on ajoute le ou les polyols à l'acide citrique (poudre), puis 5 parts en poids d'hypophosphite de sodium (HPS, en poudre). Les mélanges sont agités vigoureusement pendant 30 minutes à une température de 140°C (étape de prépolymérisation en l'absence d'agent tensioactif).

On ajoute ensuite 6 parts en poids d'agent tensioactif (mélange (2/1) de bromure de tétradécyltriméthylammonium (TTAB) et de docécylsulfate de sodium (SDS)) en poudre et on agite les mélanges obtenus vigoureusement pendant deux minutes supplémentaires. L'extrait sec des compositions ainsi obtenues est d'environ 98 % en poids.

Les préparations sont ensuite versées dans des moules rectangulaires. Les épaisseurs des couches de composition expansible thermodurcissable sont d'environ 5 mm.

Les moules contenant les compositions sont chauffés pendant 6 heures dans une étuve ventilée, thermostatée à 200°C.

[Table 1]

| | Acide citrique (parts) | Sorbitol (parts) | 1,4-butanediol (parts) | HPS (parts) | TTAB (parts) | SDS (parts) |
|---|---|---|---|---|---|---|
| Mousse comparative | 66 | 23 | | 5 | 4 | 2 |
| Composition 1 | 63 | 12 | 14 | 5 | 4 | 2 |
| Composition 2 | 61 | 3 | 25 | 5 | 4 | 2 |

Après sortie des moules de l'étuve et refroidissement des mousses formées jusqu'à température ambiante, des mesures de résistance à la déformation sont réalisées à l'aide d'un banc de compression sur des parallélépipèdes de mousse de 20 cm x 20 cm x 5 cm. On mesure l'étendue du domaine de déformation élastique (%), c'est-à-dire la déformation maximale avant rupture ou déformation plastique, en appliquant la contrainte dans un sens orthogonal à l'épaisseur.

Une mesure de la quantité de poussière produite est ensuite faite après déformation forcée à 10%, toujours dans un sens orthogonal à la hauteur.

[Table 2]

| | Masse volumique (kg/m$^3$) | Domaine de déformation élastique (%) | Formation de poussière après déformation à 10% |
|---|---|---|---|
| Mousse comparative | 50 ± 5 | 2 ± 1 | Très importante et pulvérulente |
| Composition 1 | 45 ± 5 | 10 ± 2 | Faible et non pulvérulente |
| Composition 2 | 45 ± 5 | 50 ± 10 | Aucune |

On constate que les mousses préparées selon le procédé de la présente invention, comportant une certaine quantité de diols, possèdent un domaine de déformation élastique bien plus étendu que la mousse comparative. Elles forment également beaucoup moins de poussières.

**Revendications**

**1.** Procédé de fabrication d'une mousse polyester thermodurcie, comprenant les étapes successives suivantes :

(a) chauffage d'une composition de préoligomérisation essentiellement anhydre, contenant

- un composant polyol comprenant au moins 70 % en poids, de préférence au moins 80 % en poids, d'un mélange d'au moins un sucre hydrogéné et d'au moins un diol en C$_{3-6}$,
- un composant polyacide comprenant au moins 50 % en poids de polyacide porogène choisi de préférence

9

parmi l'acide citrique et les acides dicarboxyliques $\alpha$-hydroxylés de formule (I) HOOC-$(CHR^1)_n$-CHOH-COOH où n est un entier allant de 1 - 4, de préférence de 1 - 3, en particulier 1 ou 2, et de manière tout particulièrement préférée 1, et

chaque $R^1$ représente indépendamment un atome d'hydrogène, un groupe hydroxyle (-OH) ou un groupe alkyle, de préférence alkyle en $C_{1-4}$, et éventuellement
- un catalyseur,
à une température comprise entre 100 °C et moins de 160 °C pendant une durée comprise entre 10 et 60 minutes, de préférence entre 15 et 40 minutes, sous agitation mécanique, de manière à faire réagir le composant polyol avec le composant polyacide et à former une composition d'esters oligomères,

(b) incorporation d'une composition d'agent tensioactif dans la composition d'esters oligomères, de manière à obtenir une composition expansible thermodurcissable,
(c) introduction de la composition expansible thermodurcissable obtenue dans un moule ou application de la composition expansible et thermodurcissable sur un support,
(d) chauffage de la composition expansible thermodurcissable à une température au moins égale à 165 °C, de préférence comprise entre 175 °C et 220 °C, idéalement entre 190 °C et 215 °C, pendant une durée comprise entre 10 minutes et 8 heures, de préférence entre 20 minutes et 7 heures et en particulier entre 30 minutes et 6 heures, de manière à former une mousse polyester thermodurcie.

2.  Procédé selon la revendication 1, **caractérisé par le fait qu'**il comprend en outre, pendant ou après l'étape (b) et avant l'étape (c), le moussage de la composition expansible thermodurcissable, de préférence par fouettage, battage, agitation mécanique et/ou injection de gaz.

3.  Procédé selon la revendication 1 ou 2, **caractérisé par le fait que** le mélange d'au moins un sucre hydrogéné et d'au moins un diol en $C_{3-6}$ est constitué de 5% à 95% en poids de sucre hydrogéné et de 95% à 5% en poids de diol en $C_{3-6}$, ces pourcentages se complétant à 100%.

4.  Procédé selon l'une des revendications précédentes, **caractérisé par le fait que** le composant polyol et le composant polyacide représentent ensemble au moins 80 % en poids, de préférence au moins 85 % en poids, et idéalement au moins 90 % en poids de la composition de préoligomérisation.

5.  Procédé selon l'une des revendications précédentes, **caractérisé par le fait que** le diol en $C_{3-6}$ est le 1,3-propanediol, le 1,4-butanediol ou le 1,6-hexanediol.

6.  Procédé selon l'une quelconque des revendications précédentes, **caractérisé par le fait que** le sucre hydrogéné est un sucre hydrogéné de formule $C_nH_{2n+2}O_n$ où n vaut 4, 5 ou 6.

7.  Procédé selon l'une des revendications précédentes, **caractérisé par le fait que** le composant polyacide comprend au moins 65 % en poids et en particulier au moins 80 % en poids de polyacide porogène.

8.  Procédé selon l'une quelconque des revendications précédentes, **caractérisé par le fait que** le composant polyol représente de 20 à 60 %, de préférence de 25 à 50 % et en particulier de 30 à 45 % du poids total des composants polyol et polyacide.

9.  Procédé selon l'une quelconque des revendications précédentes, **caractérisé par le fait que** la composition expansible thermodurcissable contient au plus 25 % en poids, plus préférentiellement au plus 15 % en poids et en particulier au plus 5 % en poids d'eau.

10. Procédé selon l'une quelconque des revendications précédentes, **caractérisé par le fait que** l'agent tensioactif est choisi parmi les alkylpolyglycosides ou est un mélange d'un tensioactif anionique et d'un tensioactif cationique, de préférence un mélange de dodécylsulfate de sodium (SDS) et de bromure de tétradécyltriméthyl ammonium (TTAB) ou un mélange de dodécylsulfate de sodium (SDS) et de bromure de cétyltrimethylammonium (CTAB).

11. Procédé selon l'une quelconque des revendications précédentes, **caractérisé par le fait que** l'on ajoute en outre dans le mélange d'oligomères de 0,5 et 10 parts en poids, de préférence de 1,0 à 5,0 parts en poids d'un agent de nucléation pour 100 parts en poids de mélange d'oligomères.

12. Procédé selon l'une quelconque des revendications précédentes, **caractérisé par le fait que** le polyacide porogène est choisi dans le groupe constitué d'acide citrique, d'acide malique et d'acide tartrique, de préférence d'acide citrique.

13. Procédé selon l'une quelconque des revendications précédentes, **caractérisé par le fait qu'**il comprend en outre une étape d'usinage de la mousse polyester thermodurcie obtenue à l'étape (d).

14. Composition expansible thermodurcissable, solide à température ambiante et essentiellement exempte d'eau, obtenue par

(i) chauffage d'une composition de préoligomérisation essentiellement anhydre, contenant

- un composant polyol comprenant au moins 70 % en poids, de préférence au moins 80 % en poids, d'un mélange d'au moins un sucre hydrogéné et d'au moins un diol choisi parmi les diols en $C_{3-6}$,
- un composant polyacide comprenant au moins 50 % en poids de polyacide porogène choisi parmi l'acide citrique et les acides dicarboxyliques $\alpha$-hydroxylés de formule (I) HOOC-$(CHR^1)_n$-CHOH-COOH où

n est un entier allant de 1 - 4, de préférence de 1 - 3, en particulier 1 ou 2, et de manière tout particulièrement préférée 1, et
chaque $R^1$ représente indépendamment un atome d'hydrogène, un groupe hydroxyle (-OH) ou un groupe alkyle, de préférence alkyle en $C_{1-4}$, et, éventuellement,

- un catalyseur, à une température comprise entre 100 °C et moins de 160 °C pendant une durée comprise entre 10 et 200 minutes, de préférence entre 15 et 100 minutes, sous agitation mécanique, de manière à faire réagir le composant polyol avec le composant polyacide et à former une composition d'esters oligomères,

(ii) incorporation d'une composition d'agent tensioactif dans la composition d'esters oligomères, de manière à obtenir une composition expansible thermodurcissable, et
(iii) refroidissement de la composition expansible thermodurcissable jusqu'à température ambiante.

15. Utilisation d'une composition expansible thermodurcissable, solide à température ambiante et essentiellement exempte d'eau selon la revendication 14, pour la fabrication de mousses polyester thermodurcies.


**Patentansprüche**

1. Verfahren zum Herstellen eines wärmegehärteten Polyesterschaums, umfassend die folgenden aufeinanderfolgenden Schritte:

(a) Erwärmen einer im Wesentlichen wasserfreien Voroligomerisierungszusammensetzung, die enthält

- eine Polyolkomponente, umfassend mindestens zu 70 Gew.-%, vorzugsweise mindestens zu 80 Gew.-%, eine Mischung aus mindestens einem hydrierten Zucker und mindestens einem $C_{3-6}$-Diol,
- eine Polysäurekomponente, umfassend mindestens zu 50 Gew.-% eine porenbildende Polysäure, die vorzugsweise aus Zitronensäure und $\alpha$-hydroxylierten Dicarbonsäuren der Formel (I) HOOC-$(CHR^1)_n$-CHOH-COOH ausgewählt ist, wobei n eine ganze Zahl von 1 - 4, vorzugsweise von 1 - 3, insbesondere 1 oder 2 und ganz besonders bevorzugt 1, ist, und
jedes $R^1$ unabhängig ein Wasserstoffatom, eine Hydroxylgruppe (-OH) oder eine Alkylgruppe, vorzugsweise eine $C_{1-4}$-Alkylgruppe, darstellt, und gegebenenfalls
- einen Katalysator,
bei einer Temperatur zwischen 100 °C und weniger als 160 °C während eines Zeitraums von 10 bis 60 Minuten, vorzugsweise von 15 bis 40 Minuten, unter mechanischem Rühren, um die Polyolkomponente mit der Polysäurekomponente umzusetzen und um eine Zusammensetzung aus oligomeren Estern auszubilden,

(b) Einbringen einer Tensidmittelzusammensetzung in die Zusammensetzung aus oligomeren Estern, sodass eine wärmehärtbare schäumbare Zusammensetzung erhalten wird,
(c) Einführen der erhaltenen wärmehärtbaren schäumbaren Zusammensetzung in eine Form oder Aufbringen der schäumbaren und wärmehärtbaren Zusammensetzung auf einen Träger,

(d) Erwärmen der wärmehärtbaren schäumbaren Zusammensetzung auf eine Temperatur von mindestens gleich 165 °C, vorzugsweise zwischen 175 °C und 220 °C, idealerweise zwischen 190 °C und 215 °C, während eines Zeitraums von 10 Minuten bis 8 Stunden, vorzugsweise von 20 Minuten bis 7 Stunden und insbesondere von 30 Minuten bis 6 Stunden, um einen wärmegehärteten Polyesterschaum auszubilden.

2. Verfahren nach Anspruch 1, **dadurch gekennzeichnet, dass** es ferner während oder nach Schritt (b) und vor Schritt (c) das Aufschäumen der wärmehärtbaren schäumbaren Zusammensetzung, vorzugsweise durch Aufschlagen, Schlagen, mechanisches Rühren und/oder Einspritzen von Gas, umfasst.

3. Verfahren nach Anspruch 1 oder 2, **dadurch gekennzeichnet, dass** die Mischung aus mindestens einem hydrierten Zucker und mindestens einem $C_{3-6}$-Diol zu 5 Gew.-% bis 95 Gew.-% aus hydriertem Zucker und zu 95 Gew.-% bis 5 Gew.-% aus $C_{3-6}$-Diol besteht, wobei sich diese Prozentsätze auf 100 % ergänzen.

4. Verfahren nach einem der vorstehenden Ansprüche, **dadurch gekennzeichnet, dass** die Polyolkomponente und die Polysäurekomponente zusammen mindestens 80 Gew.-%, vorzugsweise mindestens 85 Gew.-% und idealerweise mindestens 90 Gew.-%, der Voroligomerisierungszusammensetzung ausmachen.

5. Verfahren nach einem der vorstehenden Ansprüche, **dadurch gekennzeichnet, dass** das $C_{3-6}$-Diol 1,3-Propandiol, 1,4-Butandiol oder 1,6-Hexandiol ist.

6. Verfahren nach einem der vorstehenden Ansprüche, **dadurch gekennzeichnet, dass** der hydrierte Zucker ein hydrierter Zucker der Formel $C_nH_{2n+2}O_n$ ist, wobei n 4, 5 oder 6 beträgt.

7. Verfahren nach einem der vorstehenden Ansprüche, **dadurch gekennzeichnet, dass** die Polysäurekomponente mindestens zu 65 Gew.-% und insbesondere mindestens zu 80 Gew.-% porenbildende Polysäure umfasst.

8. Verfahren nach einem der vorstehenden Ansprüche, **dadurch gekennzeichnet, dass** die Polyolkomponente 20 bis 60 %, vorzugsweise 25 bis 50 % und insbesondere 30 bis 45 % des Gesamtgewichts der Polyol- und Polysäurekomponenten darstellt.

9. Verfahren nach einem der vorstehenden Ansprüche, **dadurch gekennzeichnet, dass** die wärmehärtbare schäumbare Zusammensetzung höchstens 25 Gew.-%, mehr bevorzugt höchstens 15 Gew.-% und insbesondere höchstens 5 Gew.-% Wasser enthält.

10. Verfahren nach einem der vorstehenden Ansprüche, **dadurch gekennzeichnet, dass** das Tensidmittel aus Alkylpolyglcosiden ausgewählt ist oder eine Mischung aus einem anionischen Tensid und einem kationischen Tensid, vorzugsweise eine Mischung aus Natriumdodecylsulfat (SDS) und Tetradecyltrimethylammoniumbromid (TTAB) oder eine Mischung aus Natriumdodecylsulfat (SDS) und Cetyltrimethylammoniumbromid (CTAB), ist.

11. Verfahren nach einem der vorstehenden Ansprüche, **dadurch gekennzeichnet, dass** man ferner in die Oligomerenmischung 0,5 bis 10 Gewichtsteile, vorzugsweise 1,0 bis 5,0 Gewichtsteile eines Nukleierungsmittels pro 100 Gewichtsteile der Oligomerenmischung zugibt.

12. Verfahren nach einem der vorstehenden Ansprüche, **dadurch gekennzeichnet, dass** die porenbildende Polysäure ausgewählt ist aus der Gruppe bestehend aus Zitronensäure, Apfelsäure und Weinsäure, vorzugsweise Zitronensäure.

13. Verfahren nach einem der vorstehenden Ansprüche, **dadurch gekennzeichnet, dass** es ferner einen Bearbeitungsschritt des in Schritt (d) erhaltenen wärmegehärteten Polyesterschaums umfasst.

14. Wärmehärtbare schäumbare Zusammensetzung, die bei Raumtemperatur fest und im Wesentlichen frei von Wasser ist, die erhalten wird durch

(i) Erwärmen einer im Wesentlichen wasserfreien Voroligomerisierungszusammensetzung, die enthält

- eine Polyolkomponente, umfassend mindestens zu 70 Gew.-%, vorzugsweise mindestens zu 80 Gew.-%, eine Mischung aus mindestens einem hydrierten Zucker und mindestens einem aus Diolen ausgewählten $C_{3-6}$-Diol,

- eine Polysäurekomponente, umfassend mindestens zu 50 Gew.-% eine porenbildende Polysäure ausgewählt aus Zitronensäure und $\alpha$-hydroxylierten Dicarbonsäuren der Formel (I) HOOC-$(CHR^1)_n$-CHOH-COOH, wobei n eine ganze Zahl von 1 - 4, vorzugsweise von 1 - 3, insbesondere 1 oder 2 und ganz besonders bevorzugt 1, ist, und jedes $R^1$ unabhängig ein Wasserstoffatom, eine Hydroxylgruppe (-OH) oder eine Alkylgruppe, vorzugsweise eine $C_{1-4}$-Alkylgruppe, darstellt, und gegebenenfalls,
- einen Katalysator,
bei einer Temperatur zwischen 100 °C und weniger als 160 °C während eines Zeitraums von 10 bis 200 Minuten, vorzugsweise von 15 bis 100 Minuten, unter mechanischem Rühren, um die Polyolkomponente mit der Polysäurekomponente umzusetzen und um eine Zusammensetzung aus oligomeren Estern auszubilden,

(ii) Einbringen einer Tensidmittelzusammensetzung in die Zusammensetzung aus oligomeren Estern, sodass eine wärmehärtbare schäumbare Zusammensetzung erhalten wird, und
(iii) Abkühlen der wärmehärtbaren schäumbaren Zusammensetzung bis auf Raumtemperatur.

**15.** Verwendung einer wärmehärtbaren schäumbaren Zusammensetzung nach Anspruch 14, die bei Raumtemperatur fest und im Wesentlichen frei von Wasser ist, zum Herstellen von wärmegehärteten Polyesterschäumen.

## Claims

**1.** A method for producing a thermoset polyester foam, comprising the following successive steps:

(a) heating an essentially anhydrous preoligomerization composition, containing

- a polyol component comprising at least 70 wt%, preferably at least 80 wt%, of a mixture of at least one hydrogenated sugar and at least one $C_{3-6}$ diol,
- a polyacid component comprising at least 50 wt% of a porogenic polyacid preferably selected from citric acid and the $\alpha$-hydroxylated dicarboxylic acids of formula (I) HOOC-$(CHR^1)_n$-CHOH-COOH where

n is an integer in the range from 1 to 4, preferably from 1 to 3, in particular 1 or 2, and still more preferably 1, and
each $R^1$ represents independently a hydrogen atom, a hydroxyl group (-OH) or an alkyl group, preferably $C_{1-4}$ alkyl, and optionally

- a catalyst,
at a temperature between 100°C and less than 160°C for a time between 10 and 60 minutes, preferably between 15 and 40 minutes, with mechanical stirring, so as to cause the polyol component to react with the polyacid component and form a composition of oligomeric esters,

(b) incorporating a surfactant composition in the composition of oligomeric esters, so as to obtain a thermosetting expandable composition,
(c) introduction of the thermosetting expandable composition obtained into a mold or application of the expandable composition and thermosetting on a substrate,
(d) heating the thermosetting expandable composition at a temperature equal to at least 165°C, preferably between 175°C and 220°C, ideally between 190°C and 215°C, for a time between 10 minutes and 8 hours, preferably between 20 minutes and 7 hours and in particular between 30 minutes and 6 hours, so as to form a thermoset polyester foam.

**2.** The method as claimed in claim 1, **characterized in that** it further comprises, during or after step (b) and before step (c), foaming of the thermosetting expandable composition, preferably by whipping, beating, mechanical stirring and/or injection of gases.

**3.** The method as claimed in claim 1 or 2, **characterized in that** the mixture of at least one hydrogenated sugar and at least one $C_{3-6}$ diol consists of 5 to 95 wt% of hydrogenated sugar and 95 to 5 wt% of $C_{3-6}$ diol, these percentages adding up to 100%.

**4.** The method as claimed in one of the preceding claims, **characterized in that** the polyol component and the polyacid component represent together at least 80 wt%, preferably at least 85 wt%, and ideally at least 90 wt% of the preoligomerization composition.

5.  The method as claimed in one of the preceding claims, **characterized in that** the $C_{3-6}$ diol is 1,3-propanediol, 1,4-butanediol or 1,6-hexanediol.

6.  The method as claimed in any one of the preceding claims, **characterized in that** the hydrogenated sugar is a hydrogenated sugar of formula $C_nH_{2n+2}O_n$ where n is 4, 5 or 6.

7.  The method as claimed in one of the preceding claims, **characterized in that** the polyacid component comprises at least 65 wt% and in particular at least 80 wt% of porogenic polyacid.

8.  The method as claimed in any one of the preceding claims, **characterized in that** the polyol component represents from 20 to 60%, preferably from 25 to 50% and in particular from 30 to 45% of the total weight of the polyol and polyacid components.

9.  The method as claimed in any one of the preceding claims, **characterized in that** the thermosetting expandable composition contains at most 25 wt%, more preferably at most 15 wt% and in particular at most 5 wt% of water.

10. The method as claimed in any one of the preceding claims, **characterized in that** the surfactant is selected from alkyl polyglycosides or is a mixture of an anionic surfactant and a cationic surfactant, preferably a mixture of sodium dodecyl sulfate (SDS) and tetradecyltrimethylammonium bromide (TTAB) or a mixture of sodium dodecyl sulfate (SDS) and cetyltrimethylammonium bromide (CTAB).

11. The method as claimed in any one of the preceding claims, **characterized in that** additionally from 0.5 and 10 parts by weight, preferably from 1.0 to 5.0 parts by weight of a nucleating agent per 100 parts by weight of mixture of oligomers is added to the mixture of oligomers.

12. The method as claimed in any one of the preceding claims, **characterized in that** the porogenic polyacid is selected from the group consisting of citric acid, malic acid and tartaric acid, preferably citric acid.

13. The method as claimed in any one of the preceding claims, **characterized in that** it further comprises a step of machining the thermoset polyester foam obtained in step (d).

14. Thermosetting expandable composition, solid at room temperature and essentially water-free, obtained by

    (i) heating an essentially anhydrous preoligomerization composition, containing

       - a polyol component comprising at least 70 wt%, preferably at least 80 wt%, of a mixture of at least one hydrogenated sugar and at least one diol selected from the $C_{3-6}$ diols,
       - a polyacid component comprising at least 50 wt% of a porogenic polyacid selected from citric acid and the $\alpha$-hydroxylated dicarboxylic acids of formula (I) HOOC-$(CHR^1)_n$-CHOH-COOH where

          n is an integer in the range from 1 to 4, preferably from 1 to 3, in particular 1 or 2, and quite especially preferably 1, and
          each $R^1$ represents independently a hydrogen atom, a hydroxyl group (-OH) or an alkyl group, preferably $C_{1-4}$ alkyl, and, optionally,

       - a catalyst,
       at a temperature between 100°C and less than 160°C for a time between 10 and 200 minutes, preferably between 15 and 100 minutes, with mechanical stirring, so as to cause the polyol component to react with the polyacid component and form a composition of oligomeric esters,

    (ii) incorporating a surfactant composition in the composition of oligomeric esters, so as to obtain a thermosetting expandable composition, and
    (iii) cooling the thermosetting expandable composition to room temperature.

15. The use of a thermosetting expandable composition, solid at room temperature and essentially water-free as claimed in claim 14, for the production of thermoset polyester foams.

EP 3 898 796 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016139401 A
- WO 2016174328 A
- WO 2018109362 A
- WO 2016207517 A
- FR 3075208
- FR 3075209
- WO 2010059925 A
- EP 2628757 A
- FR 1762334
- FR 1662370

**Littérature non-brevet citée dans la description**

- **M. M. BARBOOTI et al.** Thermal Décomposition of Citric Acid. *Thermochimica Acta,* 1986, vol. 98, 119-126
- **D. WYRZYKOWSKI et al.** Thermal Behavior of Citric Acid and Isomeric Aconitic Acids. *J. Therm. Anal. Calorim.,* 2001, vol. 104, 731-735